# EUROPEAN PATENT SPECIFICATION

(11) **EP 3 263 477 B1**
(45) Date of publication and mention of the grant of the patent: **14.10.2020**
(21) Application number: 16755725.5
(22) Date of filing: 26.02.2016
(51) Int. Cl.: B65D 65/40, B32B 27/00, B32B 27/20, B65D 85/72, B32B 7/12, B32B 27/10, B32B 27/36, B32B 29/00, B65D 77/20

(54) **PACKAGING MATERIAL AND METHOD FOR MANUFACTURING SAME**
VERPACKUNGSMATERIAL UND VERFAHREN ZUR HERSTELLUNG DAVON
MATÉRIAU D'EMBALLAGE ET PROCÉDÉ DE FABRICATION DE CELUI-CI

(30) Priority: 28.02.2015 JP 2015039705
(43) Date of publication of application: 03.01.2018
(73) Proprietor: Toyo Aluminium Kabushiki Kaisha, Osaka-shi, Osaka 541-0056 (JP)
(72) Inventor: TERASAWA, Yuya, Osaka-shi Osaka 541-0056 (JP); OE, Hiroshi, Osaka-shi Osaka 541-0056 (JP); NISHIKAWA, Hiroyuki, Osaka-shi Osaka 541-0056 (JP); SEKIGUCHI, Tomonobu, Osaka-shi Osaka 541-0056 (JP); FUJIMOTO, Kazuya, Osaka-shi Osaka 541-0056 (JP)
(74) Representative: Müller-Boré & Partner Patentanwälte PartG mbB
(86) International application number: PCT/JP2016/055920
(87) International publication number: WO 2016/136981

(56) References cited:
- JP-A- 2003 267 433
- JP-A- 2004 001 876
- JP-A- 2004 026 299
- JP-A- 2013 071 779
- JP-A- 2013 075 715
- JP-A- 2013 159 344
- JP-A- 2013 208 816
- JP-A- 2014 024 188
- JP-A- 2014 213 937
- JP-A- 2015 034 038

## Description

The present invention relates to a packaging material and a method for manufacturing the packaging material. More particularly, the present invention relates to a packaging material for packaging food, beverages, cosmetics, pharmaceuticals, or the like.

Conventionally, in such fields as food, beverage, pharmaceutical, cosmetic, and chemical product fields, packaging materials for packaging products to be packaged are used. Such packaging materials are required to have not only a sealing property, but also thermo-adhesiveness, a light blocking property, heat resistance, durability, and the like.

In recent years, a packaging material having a property (non-adhesion properties) which renders a product to be packaged less adhesive to the packaging material has been developed and practically used. For example, a lid material that can prevent a content from adhering has been known, such as a lid material including a base layer and a heat sealing layer which are integrated with each other via an adhesive layer. The heat sealing layer is made from polyolefin containing at least one of a non-ionic surface activator and a hydrophobic additive and having an adhesion preventing effect and has a thickness larger than 10 µm. Between the adhesive layer and the heat sealing layer, an intermediate layer made from polyolefin is provided (Patent Document 1) .

On the other hand, the present inventors have developed packaging materials in each of which an adhesion preventing layer is formed on a heat sealing layer in order to further enhance the anti-adhesion property (Patent Documents 2 to 4) . These packaging materials have already been distributed in the market and used in various fields. Patent Document 5 discloses a packaging material.

Representative examples of a product to be packaged with a packaging material having the anti-adhesion property include yogurt. The annual domestic production of fermented milk, such as yogurt, in Japan is over 1,000,000 kiloliters and, in yogurt factories, production lines are operating almost 365 days. Most of products distributed in the market are yogurt packaged in plastic containers or paper/polyethylene containers. The containers are sealed with heat sealed lids covering the openings thereof. Since hundreds of thousands of such products are produced per day, a heat sealing time required for each of the products is limited. Normally, heat sealing should be completed within seconds.

[Patent Document 1] Japanese Patent Application Publication No. 2002-37310
[Patent Document 2] Japanese Patent Application Publication No. 2010-184454
[Patent Document 3] Japanese Patent Application Publication No. 2011-73219
[Patent Document 4] Japanese Patent Application Publication No. 2011-93315
[Patent Document 5] Japanese Patent Application Publication No. 2013-075715

However, with the packaging material having the adhesion preventing layer on the surface of the heat sealing layer, due to the adhesion preventing layer formed on the heat sealing layer, it may be difficult to reliably accomplish heat sealing in a short time of about a few seconds.

When the heat sealing is incomplete, the packaging material does not fulfill its inherent function of sealing the product to be packaged, resulting in a product having a critical defect. Therefore, incomplete heat sealing should absolutely be avoided. To more reliably perform heat sealing, it may be considered to increase the heat sealing time. However, production efficiency places a limit on the increase of the heat sealing time and, eventually, heat sealing needs to be completed within seconds. In other words, it is requested to improve a hot tack property to allow heat sealing to be completed within seconds (preferably, within two seconds).

A primary object of the present invention is to provide a packaging material in which an adhesion preventing layer is laminated on the surface of a heat sealing layer and which can provide a more excellent hot tack property.

As a result of continuing intensive study in view of the problems of the prior art technology, the present inventors have found that, by using a specified layer configuration, the above-mentioned object can be attained and completed the present invention.

That is, the present invention relates to the following packaging material and a method for manufacturing the same.
1. The packaging material comprising in the following order at least:
   a) a base layer;
   b) a heat sealing layer; and
   c) an adhesion preventing layer, wherein
      (1) the heat sealing layer contains filler particles and has a dense region where the filler particles are densely present and a sparse region where the filler particles are sparsely distributed,
      (2) each of the dense region and the sparse region has a substantially belt-like planar shape, and
      (3) the dense region and the sparse region are alternately and consecutively arranged such that the entire heat sealing layer has a striped pattern.
2. The packaging material according to the above-mentioned first aspect, wherein the heat sealing layer is formed so as to cover the entire base layer.
3. The packaging material according to the above-mentioned first aspect, wherein the adhesion preventing layer is formed so as to substantially entirely cover the dense region and the sparse region in the heat sealing layer.
4. The packaging material according to the above-mentioned first aspect, wherein the adhesion preventing layer is made from hydrophobic fine particles.
5. The packaging material according to the above-mentioned first aspect, wherein an average particle diameter of the filler particles is 0.1 to 50 µm.
6. The packaging material according to the above-mentioned first aspect, wherein a content of the filler particles in the heat sealing layer is 1 to 80 wt%.
7. The method for manufacturing a packaging material according to the above-mentioned first aspect, the method including:
   (1) a step of coating one of surfaces of the base layer with an ink containing a heat sealing component and filler particles by using a gravure printing method using a tri-helical plate or virgule plate, thereby forming the heat sealing layer; and
   (2) a step of coating a surface of the obtained heat sealing layer with a dispersion liquid in which hydrophobic particles are dispersed in a solvent, thereby forming the adhesion preventing layer.

The packaging material of the present invention can exhibit an excellent hot tack property despite the adhesion preventing layer laminated on the surface of the heat sealing layer. More specifically, since the heat sealing layer having a specified structure is formed in the packaging material of the present invention, a desired heat sealing effect can be obtained within seconds (preferably within 2 seconds, and more preferably within 1.5 seconds). As a result, it is possible to provide an excellent hot tack property as well as an excellent non-adhesion property (water repellency or yogurt repellency).

In addition, the packaging material of the present invention can also achieve a more excellent adhesion preventing effect even when liquid food or a beverage (e.g. , yogurt) containing water and fat is packaged therein. In other words, even when yogurt or the like contains a relatively large amount of fat (milk fat), the packaging material of the present invention can achieve an excellent adhesion preventing effect. The conventional packaging material has a problem in that, e.g., when yogurt of a type containing a relatively large amount of milk fat (in particular, a milk fat content of not less than 3%) compared to those of the other types of yogurt is packaged therein, the water repellency thereof significantly deteriorates. By contrast, the packaging material of the present invention allows an intended adhesion prevention qualities (water repellency or yogurt repellency) to be reliably obtained even when liquid food or a beverage (e.g., yogurt) having a fat content (milk fat content) of not less than 3% (in particular, 3% to 10% or 3% to 8%) is packaged therein.

[Fig. 1]

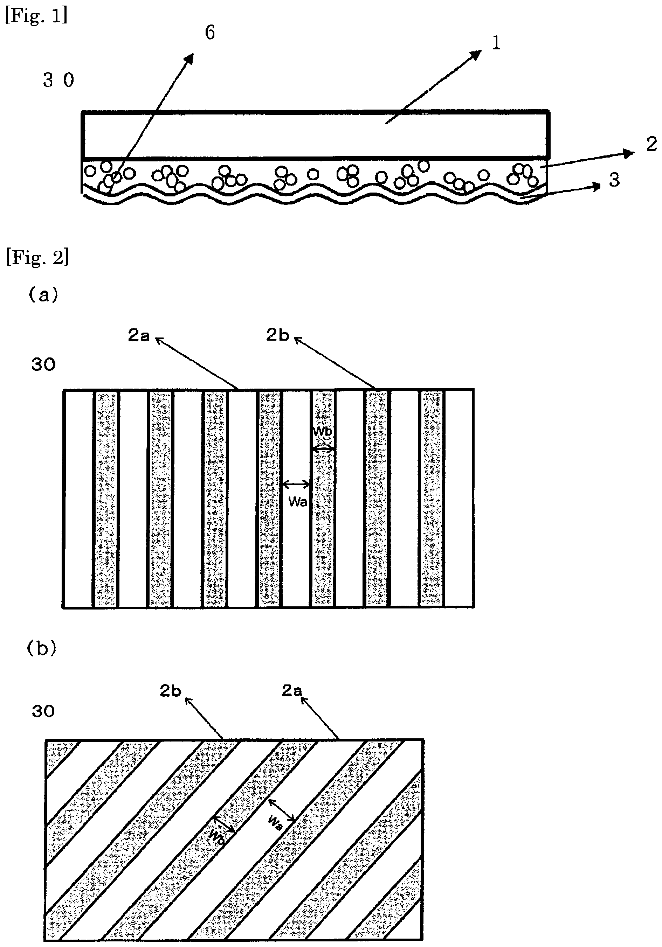

   Fig. 1 is a schematic diagram showing a cross-sectional structure of a packaging material of the present invention.
[Fig. 2]
   Fig. 2 is a schematic diagram showing a planar structure of the packaging material of the present invention.
[Fig. 3]

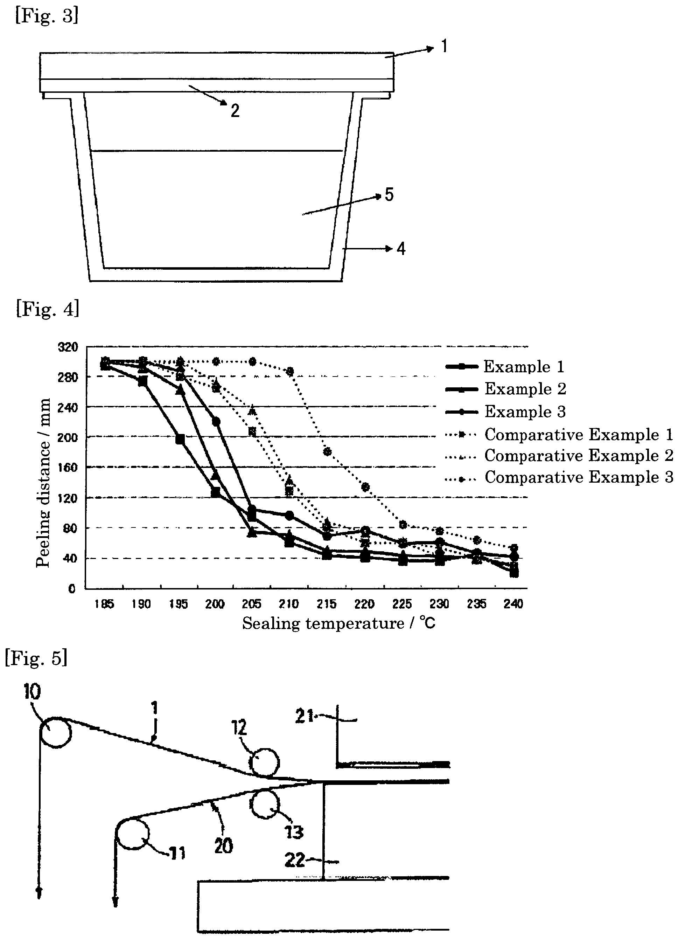

   Fig. 3 shows a schematic diagram of a cross-sectional structure of a packaged body produced using the packaging material of the present invention as a lid member for a container.
[Fig. 4]
   Fig. 4 shows the result of examining the peeling distance of a split seal using a hot tack test in Test Example 1.
[Fig. 5]
   Fig. 5 shows a schematic view of the hot tack tester used in Test Example 1.
[Fig. 6]

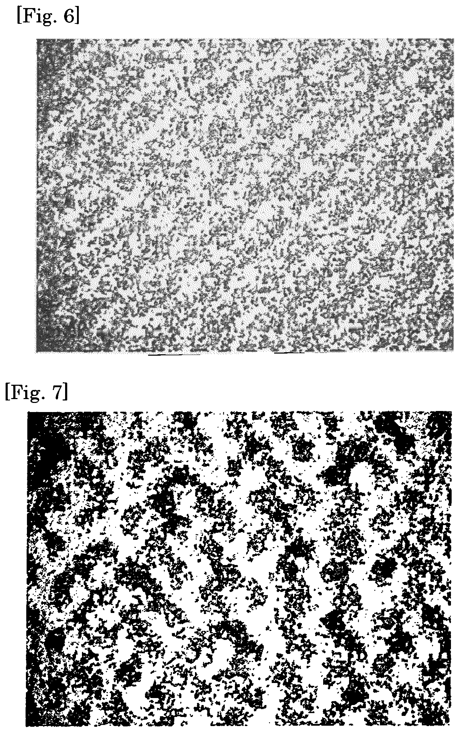

   Fig. 6 is a view showing the result of observing the surface of a packaging material sample obtained in Example 1 which is closer to a heat sealing layer (adhesion preventing layer) using an optical microscope.
[Fig. 7]
   Fig. 7 is a view showing the result of observing the surface of a packaging material sample obtained in Comparative Example 1 which is closer to a heat sealing layer (adhesion preventing layer) using an optical microscope.

### 1. Packaging Material

A packaging material of the present invention is a packaging material including at least:
a) a base layer;
b) heat sealing layer; and
c) an adhesion preventing layer, wherein
   (1) the heat sealing layer contains filler particles and has a dense region where the filler particles are densely present and a sparse region where the filler particles are sparsely distributed,
   (2) each of the dense region and the sparse region has a substantially belt-like planar shape, and
   (3) the dense region and the sparse region are alternately and consecutively arranged such that the entire heat sealing layer has a striped pattern.

### 1) Structure of Packaging Material

Fig. 1 shows a schematic diagram of a cross section of a sheet-like packaging material according to the present invention. As shown in Fig. 1, a packaging material 30 of the present invention has a basic configuration including a base layer 1, a heat sealing layer 2, and an adhesion preventing layer 3. As shown in Fig. 1, the base layer 1, the heat sealing layer 2, and the adhesion preventing layer 3 may be laminated to come in direct contact with each other. However, another one layer or other two or more layers may also be interposed between these layers as long as they do not substantially adversely affect the advantages of the present invention. In the heat sealing layer 2, filler particles 6 are contained.

The heat sealing layer described above has dense regions where the filler particles are densely present and sparse regions where the filler particles are sparsely dispersed. In short, in the present invention, it is appropriate that (Densities of Filler Particles in Dense Regions) > (Densities of Filler Particles in Sparse Regions) is satisfied. Each of the densities can be adjusted appropriately by varying filler particle diameters, and the shapes/sizes of cells in a diagonal line plate used in gravure printing. As will also be shown in Examples described later, the dense regions and the sparse regions can be discriminated/determined by observation using an optical microscope. Note that the present invention also involves the case where there are few filler particles in the sparse regions.

The planar state of the dense regions and the sparse regions (layout configuration of the both regions) is such that each of the regions has a substantially belt-like shape (substantially rectangular shape or strip-like shape). The both regions having the substantially belt-like shapes may appropriately be alternately and consecutively arranged adjacent to each other to form a striped pattern as a whole. However, the striped pattern is not limited thereto. For example, as shown in Fig. 2(a), a mode in which a vertical striped pattern including dense regions 2a and sparse region 2b is formed may also be used. Alternatively, as shown in Fig. 2(b), a mode in which a diagonal striped pattern including the dense regions 2a and the sparse regions 2b is formed may also be used. Needless to say, a mode in which a lateral striped pattern is formed may also be used. The individual belt-like regions may have linear shapes as shown in Fig. 2 or may also have substantially curved shapes, substantially meandering shapes, or the like.

In a planar direction, a width Wa of each of the dense regions 2a and a width Wb of each of the sparse regions 2b are not particularly limited. Normally, each of the widths Wa and Wb can appropriately be set within a range of about 0.05 to 5 mm, particularly 0.1 to 0.8 mm. The respective widths of the both regions may be the same or different from each other. The width Wa mentioned above shows a value obtained by arbitrarily selecting ten widths from among the dense regions under observation using an optical microscope and arithmetically averaging the respective widths Wa₁, Wa₂, ... Wa₁₀ of the selected ten dense regions. The width Wb mentioned above shows a value obtained by arbitrarily selecting ten widths from among the sparse regions under observation using an optical microscope and arithmetically averaging the respective widths Wb₁, Wb₂, ... Wb₁₀ of the selected ten sparse regions.

The respective widths of the plurality of dense regions may be the same or different from each other, but it is desirable that the dense regions are formed to have substantially the same widths. The respective widths of the plurality of sparse regions may also be the same or different from each other, but it is desirable that the sparse regions are formed to have substantially the same widths.

In the present invention, the heat sealing layer is preferably formed so as to cover the entire base layer, as also shown in Fig. 1. This allows heat sealing to be performed at any portion of the packaging material.

The adhesion preventing layer 3 is formed on the substantially entire outermost surface (surface not bonded to the base layer (opposite to the base layer)) of the heat sealing layer 2 as the outermost layer of a laminate body including the base layer 1 and the heat sealing layer 2.

The adhesion preventing layer 3 is preferably composed of hydrophobic particles (the illustration of the individual particles is omitted in Fig. 1). That is, the hydrophobic particles adhere to the heat sealing layer 2 and fixed thereto. The hydrophobic particles may include primary particles, but preferably include a large number of its aggregates (secondary particles). In particular, the hydrophobic particles more preferably form a porous layer made of a three-dimensional net-like structure. In other words, on the surface of the heat sealing layer 2, the porous layer having the three-dimensional net-like structure formed of the hydrophobic particles is preferably laminated. When the porous layer having the three-dimensional net-like structure is thus formed, the porous layer mentioned above serves as the outermost layer of the packaging material.

The adhesion preventing layer is also preferably formed continuously over both the dense regions and the sparse regions in the heat sealing layer, as shown in Fig. 1. This conceivably allows an excellent adhesion preventing property resulting from the dense regions and a high hot tack property resulting from the sparse regions to be simultaneously and more reliably obtained at the surface (exposed surface) of the adhesion prevention layer.

In the present invention, the adhesion preventing layer allows an excellent anti-adhesion property to be retained over a long period of time. The particular reason for this is conceivably that the hydrophobic particles are fixed to the dense regions of the heat sealing layer 2. That is, even when the packaging material comes in contact with the product to be packaged or equipment or a device during a process, the hydrophobic particles fixed in the gaps (cleavages) between the filler particles in the dense regions are less likely to come into contact with the product to be packaged or the like. Therefore, it is possible to effectively inhibit or prevent the hydrophobic particles from being detached. As a result, it is conceivably possible to consistently show an excellent anti-adhesion property. It can otherwise be said that an excellent non-adhesion properties can be obtained over a relatively long period.

As shown in Fig. 1, by using the filler particles 6, it is possible to further improve the abrasion resistance of a heat sealing surface and more effectively inhibit or prevent the hydrophobic particles from being detached. This may conceivably be because, in particular, the filler particles in the heat sealing layer 2 are located exclusively in the dense regions.

The packaging material of the present invention has at least a part thereof heat sealed when used. That is, a part or the whole of the packaging material is heat sealed via the heat sealing layer 2. For example, when the packaging material of the present invention is used as a lid member as will be shown in Examples described later, the heat sealing layer is formed over the entire surface of the lid member, and the lid member is heat sealed to the portion of a container (e.g., the flange of the opening of the container) to be heat sealed. The counterpart member (adherend) to which the packaging material of the present invention is to be heat sealed is not limited. Heat sealing of the packaging material of the present invention also includes not only the case where the packaging material of the present invention is heat sealed to another packaging material (which is the container in the case mentioned above) as described above, but also the case where the packaging materials of the present invention are heat sealed to each other to manufacture a bag body or the like. When heat sealing is performed using the packaging material of the present invention, the hydrophobic particles adhering onto the heat sealing layer are embedded in the heat sealing layer when used. Accordingly, the hydrophobic particles do not substantially disturb heat sealing to allow the packaging material of the present invention to be reliably heat sealed to the member (adherend) to which the packaging material of the present invention is to be heat sealed. In other words, despite the interposition of the hydrophobic particles between the heat sealing layer and the adherend, it is possible to show excellent heat sealing performance.

Fig. 3 shows a schematic diagram of a cross-sectional structure of a packaged body produced by using the packaging material of the present invention as a lid member for a container. In Fig. 3, the illustration of the hydrophobic particles 3 and the filler particles 6 is omitted. A container 4 is filled with a content 5 and sealed in a state where the flange of the opening thereof is in contact with the heat sealing layer 2 of the packaging material (laminate body). In other words, the packaging material of the present invention is used in a state where the hydrophobic particles adhering to the heat sealing layer 2 can come into contact with the content 5. In such a case also, the heat sealing layer 2 is protected by the hydrophobic particles and has an excellent anti-adhesion property. Consequently, even when the content 5 comes into contact with the vicinity of the heat sealing layer 2, the adhesion of the content 5 to the heat sealing layer 2 is inhibited by the hydrophobic particles 3 (or a porous layer made from the hydrophobic particles) and also repelled. As a result of being repelled by the hydrophobic particles (or the porous layer made from the hydrophobic particles), the content is prevented from remaining in a state adhering to the vicinity of the heat sealing layer and returns into the container. In addition, since some of the hydrophobic particles 3 (or the porous layer made from the hydrophobic particles) have entered and remain in the recessed portions or gaps formed by the filler particles, it is possible to effectively prevent the release/detachment of the hydrophobic particles 3 (or the porous layer made from the hydrophobic particles) due to physical contact with the content, vibration during transportation, or the like. As a result, an excellent non-adhesion property can consistently be obtained over a long period of time. A material for the container 4 can preferably be selected from among, e.g., a metal, a synthetic resin, glass, paper, a composite material thereof, and the like. In accordance with the material, the type, components, and the like of the heat sealing layer can appropriately be adjusted.

### 2) Configurations/Compositions of Individual Layers 2-1) Base layer

For the base layer, a known material can be used. For example, paper, synthetic paper, a resin film, a resin film with a vapor-deposited layer, aluminum foil, another metal foil, or the like can appropriately be used alone or as a composite material/laminated material of such known materials.

A lamination method for the base layer and a lamination method for the base layer and the heat sealing layer or the like are also not limited. A known method such as, e.g., a dry laminate method, an extrusion laminate method, a wet laminate method, or a heat laminate method can be used.

The thickness of the base layer is not particularly limited, but the range used in a known packaging material can be set. Normally, it is preferable to set the thickness of the base layer to, e.g., about 1 to 500 µm.

### 2-2) Heat Sealing Layer

The heat sealing layer is disposed as the outermost layer (on the outermost surface) of the laminate body. The heat sealing layer contains the filler particles and, as the component (referred to also as the main component) thereof other than the filler particles, a known heat sealing component can be used. For example, not only the component of a known sealant film, but also the component used in an adhesive such as a lacquer type adhesive, an easy peel adhesive, or a hot melt adhesive can be used.

The main component of the heat sealing layer is not limited. For example, not only low-density polyethylene, medium-density polyethylene, high-density polyethylene, straight-chain (linear) low-density polyethylene, polypropylene, an ethylene-vinyl acetate copolymer, an ionomer resin, an ethylene-acrylic acid copolymer, an ethylene-ethyl acrylate copolymer, an ethylene-methacrylic acid copolymer, an ethylene-methyl methacrylate copolymer, an ethylene-propylene copolymer, a methylpentene polymer, a polybutene polymer, an acid-modified polyolefin resin obtained by modifying a polyolefin-based resin such as polyethylene or polypropylene with an unsaturated carboxylic acid such as an acrylic acid, a methacrylic acid, a maleic acid, a maleic anhydride, a fumaric acid, or an itaconic acid, a polyvinyl acetate-based resin, a poly(meth)acrylic-based resin, a polyacrylonitrile resin, a polyvinyl chloride-based resin, or another thermo-adhesive resin, but also a blended resin thereof, a copolymer including a combination of the constituent monomers thereof, a modified resin, or the like can be used. As a component of the heat sealing layer, a single-layer sealant film can be employed. Besides, co-extrusion-laminated or extrusion-laminated sealant films having two or more layers can also be employed.

The thickness of the heat sealing layer is not particularly limited. However, in terms of productivity, cost, and the like, the thickness of the heat sealing layer in the dense regions is set to preferably about 5 to 100 µm, and more preferably about 10 to 50 µm. The thickness of the heat sealing layer in the sparse regions is set to preferably about 1 to 50 µm, and more preferably about 1 to 30 µm. Also, in the present invention, (Thickness in Dense Regions) > (Thickness in Sparse Regions) is preferably satisfied.

When the packaging material of the present invention is thermally bonded, the hydrophobic particles present on the region to be thermally bonded are embedded in the heat sealing layer. This brings the resin component of the heat sealing layer onto its outermost surface and thus allows thermal bonding to be performed. Accordingly, it is desirable to set the thickness of the heat sealing layer within the foregoing thickness range so that as many hydrophobic particles as possible can be embedded in the heat sealing layer.

In the present invention, the heat sealing layer is provided such that the belt-like dense regions and the belt-like sparse regions are alternately arranged. Preferably, the belt-like dense regions and the belt-like sparse regions are alternately arranged with a pitch of 100 to 400 µm. More preferably, the belt-like dense regions and the belt-like sparse regions are alternately arranged with a pitch of 200 to 300 µm. In the present invention, the term "pitch" means the total of the width Wa of each of the dense regions and the width Wb of each of the sparse regions in a direction perpendicular to the extending direction of belts when viewed in plan view.

The base layer may also include another layer. That is, in order to impart various properties (such as anti moisture permeability, anti oxygen permeability, a light blocking property, heat resistance, and shock resistance) as necessary, each of the layers used in known packaging materials may also be laminated at any position so as to not adversely affect the advantages of the present invention. Examples of such a layer include a printed layer, a print protective layer (so-called OP layer), a coloring layer, an adhesive layer, an adhesion enhancing layer, a primer coat layer, an anchor coat layer, an anti-lubricant layer, a lubricant layer, and an anti-fog additive layer.

### 2-3) Adhesion Preventing Layer

In the packaging material of the present invention, the adhesion preventing layer is formed so as to come into contact with the heat sealing layer. As the adhesion preventing layer, a layer comprising hydrophobic particles can appropriately be used.

### Hydrophobic Particles

The hydrophobic particles are not particularly limited as long as the hydrophobic particles have a hydrophobic property. Specifically, oxide fine particles having a hydrophobic property or the like can be used. The hydrophobic particles may also be particles hydrophobized by surface treatment. For example, it is also possible to use fine particles obtained by performing surface treatment on hydrophilic oxide fine particles using a silane coupling agent or the like and thus providing the oxide fine particles with a hydrophobic surface state.

More specifically, for the oxide fine particles, at least one of silica (silicon dioxide), alumina, titania, and the like can be used appropriately. As silica, alumina, titania, and the like, known or commercially available products can be used. Examples of silica products include products available under the names "AEROSIL R972", "AEROSIL R972V", "AEROSIL R972CF", "AEROSIL R974", "AEROSIL RX200", and "AEROSIL RY200" (each produced by Nippon Aerosil Co., Ltd.), products available under the names "AEROSIL R202", "AEROSIL R805", "AEROSIL R812", and "AEROSIL R812S" (each produced by Evonik Degussa GmbH), and products available under the names "SYLOPHOBIC 100", "SYLOPHOBIC 200", and "SYLOPHOBIC 603" (each produced by Fuji Silysia Chemical Ltd.). Examples of titania products include a product available under the name "AEROXIDE TiO₂ T805" (produced by Evonik Degussa GmbH). Examples of alumina products include fine particles obtained by treating a product under the name "AEROXIDE Alu C" (produced by Evonik Degussa GmbH) or the like with a silane coupling agent and hydrophobizing the surfaces of the particles.

Among them, hydrophobic silica fine particles can be used appropriately. In particular, in terms of being able to obtain a more excellent non-adhesion property, hydrophobic silica fine particles having trimethylsilyl groups on the surfaces thereof are preferred. Examples of a commercially available product corresponding thereto include "AEROSIL R812" and "AEROSIL R812S" (each produced by Evonik Degussa GmbH) mentioned above.

The quantity (post-drying weight) of the hydrophobic particles allowed to adhere to the surface of the packaging material is not limited. The quantity of the adhering hydrophobic particles is normally set to preferably 0.01 to 10 g/m², more preferably 0.2 to 1.5 g/m², and most preferably 0.2 to 1 g/m². The setting of the quantity to a value within the foregoing range allows a more excellent adhesion preventing property to be obtained over a long period of time and also provides more advantages in terms of inhibiting the detachment of the hydrophobic particles, cost, and the like.

Preferably, the hydrophobic particles adhering to the surface of the packaging material form a porous layer having a three-dimensional net-like structure. The thickness of the porous layer is preferably about 0.1 to 5 µm, and more preferably about 0.2 to 2.5 µm. The adhesion of the hydrophobic particles in the form of such a porous layer allows the layer to contain more air and show a more excellent anti-adhesion property.

The average primary particle diameter of the hydrophobic particles is preferably about 3 nm to 20 µm, more preferably about 3 to 100 nm, and most preferably 5 to 50 nm. In the present invention, the measurement of the average primary particle diameter can be performed using a scanning electron microscope (SEM or FE-SEM). When the resolution of the scanning electron microscope is low, the measurement may also be performed using another electron microscope such as a transmission electron microscope in combination. Specifically, when the particles have spherical shapes, the diameters thereof are measured as such. When the particles have non-spherical shapes, the average value of the longest and shortest diameters thereof is regarded as the diameter thereof. Then, the average of the diameters of the fifty particles arbitrarily selected under observation using the scanning electron microscope and the like is assumed to be the average primary particle diameter.

The hydrophobic particles may also adhere to the entire surface (entire surface opposite to the surface closer to the base layer) of the heat sealing layer or adhere to the region other than the region (so-called adhesion margin) to which the heat sealing layer is to be thermally bonded.

In the present invention, even when the hydrophobic particles adhere to the entire surface of the heat sealing layer, most or all of the hydrophobic particles present on the region to be thermally bonded are embedded in the heat sealing layer. This prevents the thermal bonding from being significantly disturbed. In terms of industrial production also, it is desirable that the hydrophobic particles adhere to the entire surface of the heat sealing layer.

### Filler Particles

In the present invention, the filler particles are contained in the heat sealing layer. The filler particles contained in the heat sealing layer allow the packaging material to have more excellent abrasion resistance and retain the abrasion resistance over a long period of time. As a result, an adhesion preventing effect (e.g., water repellency or yogurt repellency) can be further maintained.

As the filler particles, filler particles each containing at least one of an organic component and an inorganic component can be used. Examples of the inorganic component which can be used appropriately include 1) a metal such as aluminum, copper, iron, titanium, silver, or calcium or an alloy or intermetallic compound including such a metal, 2) an oxide such as silicon oxide, aluminum oxide, zirconium oxide, titanium oxide, or iron oxide, 3) an inorganic or organic acid salt such as calcium phosphate or calcium stearate, 4) glass, and 5) a ceramic such as aluminum nitride, boron nitride, silicon carbide, or silicon nitride.

Examples of the organic component which can be used appropriately include an organic polymer component (or resin component) such as an acrylic resin, a urethane-based resin, a melamine-based resin, an amino resin, an epoxy resin, a polyethylene-based resin, a polystyrene-based resin, a polypropylene-based resin, a polyester-based resin, a cellulose-based resin, a vinyl chloride-based resin, polyvinyl alcohol, an ethylene-vinyl acetate copolymer, an ethylene-vinyl alcohol copolymer, an ethylene-ethyl acrylate copolymer, polyacrylonitrile, or polyamide.

In the present invention, particles containing an organic component are preferred among them. It is particularly preferable to use resin beads.

The shape of each of the filler particles is not limited. The filler particle may have any of, e.g., a spherical shape, a spheroidal shape, an irregular shape, a tear-drop shape, a flaky shape, a hollow shape, a porous shape, and the like.

The average particle diameter of the filler particles is not particularly limited, and may be set appropriately to a value within a range of, e.g., 0.1 to 50 µm, and preferably 1 to 30 µm. However, since the gaps between the filler particles are positively used, the average particle diameter of the filler particles is preferably set larger than the average primary particle diameter of the hydrophobic particles.

In the case of using resin beads, it is desirable to set the melting point of the resin beads lower than the melting point of the heat sealing layer. Normally, it is more preferable to set the melting point of the resin beads to 160°C or less. By using the resin beads having such a melting point, the adhesion between the heat sealing layer and the resin beads is improved to allow the abrasion resistance and the anti-adhesion property to be more effectively sustained. From this viewpoint, a preferred material for the resin beads is a polyolefin-based resin. For example, at least one of a polyethylene-based resin, a polypropylene resin, a polybutene resin, and the like can be used appropriately.

Even when the melting point of the resin beads is higher than the melting point of the heat sealing layer, by employing a heat sealing layer having a low melting point, the adhesion between the resin beads and the heat sealing layer is improved to allow the abrasion resistance and the anti-adhesion property to be effectively sustained in the same manner as described above. That is, the welding of the respective components of the resin beads and the heat sealing layer allows the resin beads to be firmly fixed into the heat sealing layer. As a result, a synergetic effect between the resin beads and the hydrophobic particles in the gaps therebetween or adhering to the surfaces thereof allows the abrasion resistance and the anti-adhesion property to be more effectively sustained.

It is appropriate to measure the average particle diameter of the filler particles using a laser diffraction particle size distribution analyzer. However, when the measurement using a laser diffraction particle size distribution analyzer is difficult, it is appropriate to observe (or photograph) the filler particles using a microscope such as, e.g., a scanning electron microscope. When the particles have spherical shapes, the diameters thereof are measured as such. When the particles have non-spherical shapes, the average value of the longest and shortest diameters thereof is regarded as the diameter thereof. Then, the average of the diameters of the fifty particles arbitrarily selected under observation using the scanning electron microscope and the like is assumed to be the average particle diameter.

The content of the filler particles in the heat sealing layer of the present invention can be changed appropriately in accordance with the type of the filler particles, the average particle diameter thereof, or the like. Normally, it is appropriate to set the content of the filler particles in the heat sealing layer to preferably 1% to 80%, more preferably about 5% to 50%, and most preferably 10% to 30% on a solid content weight basis.

### 2. Method for Manufacturing Packaging Material

The packaging material of the present invention can appropriately be manufactured in accordance with the following method for example. That is, the packaging material of the present invention can appropriately be manufactured in accordance with a method for manufacturing a packaging material including in order at least a) a base layer, b) a heat sealing layer, and c) an adhesion preventing layer,
the method comprising:
(1) a step of forming the heat sealing layer by coating one of surfaces of the base layer with an ink containing a heat sealing component and filler particles by using a gravure printing method using a diagonal line plate (heat sealing layer formation step); and
(2) a step of forming the heat sealing layer by coating a surface of the obtained heat sealing layer with a dispersion liquid in which hydrophobic particles are dispersed in a solvent (adhesion preventing layer formation step).

### Heat Sealing Layer Formation Step

In the heat sealing layer formation step, the one of the surfaces of the base layer is coated with the ink containing the heat sealing component and the filler particles using the gravure printing method using the diagonal line plate to form the heat sealing layer.

A typically used gravure plate has depressions in the form of small holes called cells, which are engraved therein. The ink is temporarily held in the cells and transferred onto a surface (which is the one of the surfaces of the base layer in the present invention) to be subjected to printing to carry out gravure printing.

By contrast, in the diagonal line plate used in the present invention, each of the cells has an oblong shape extending in one direction. Namely, the present invention uses the gravure plate including a roll (cylinder) having a plurality of linear groove portions (recessed portions) formed on the roll. When the gravure printing is performed using this, a state is established in which the ink is held in the linear groove portions of the gravure plate. The filler particles in the ink get together exclusively in the groove portions (cells) . When the ink is transferred in such a state onto the surface to be subjected to printing, the belt-like dense regions are formed of the regions corresponding to the groove portions described above, while the belt-like sparse regions are formed of the regions corresponding to the portions other than the groove portions described above. More specifically, at the time of transfer, the ink is transferred onto the portions corresponding to the groove portions described above, immediately after the transfer, a part of the ink flows to spread. This allows the heat sealing layer in which the dense regions centering on the portions corresponding to the groove portions described above and the sparse regions created by the flow of the ink are alternately arranged to be effectively formed.

Accordingly, in the present invention, the dense regions have shapes substantially corresponding to the regions of the linear groove portions of the diagonal line plate, while the sparse regions have shapes substantially corresponding to the regions other than the groove portions described above. The densities of the filler particles in the dense regions and the sparse regions can also be set to values in ranges particularly in accordance with the shapes and widths/depths of the groove portions (cells) of the diagonal line plate in use. For example, as the depths of the cells of the diagonal line plate are larger, the density of the filler particles in each of the dense regions can be increased. Also, for example, as the widths of the cells of the diagonal line plate are smaller, the density of the filler particles in each of the dense regions can be increased.

The specifications of the diagonal line plate are not particularly limited, but are preferably set as follows in terms of more reliably obtaining an excellent hot tack property and an excellent adhesion preventing effect. The angles of diagonal line in the diagonal line plate are set to preferably 10 to 80 degrees, and more preferably 30 to 60 degrees relative to a printing direction. The number of the diagonal lines (number of grooves) is set to preferably 50 to 200 per 2.54 cm (inch), and more preferably 100 to 150 per 2.54 cm (inch). In the present invention, the diagonal line plate includes not only a planar flat plate but also a roll-shaped roll plate.

As the ink used for the gravure printing, the ink containing the heat sealing component and the filler particles is used. In this case, any of a dispersion liquid in which the heat sealing component is dispersed in a solvent, a solution in which the heat sealing component is dissolved in a solvent, and the like can be used. As the solvent, the same solvent as included in an ink used for typical gravure printing can be used. Besides, the same solvent as used in a dispersion liquid in the adhesion preventing layer formation step described later can also be used. As a method for causing the filler particles to be contained in the heat sealing layer, the filler particles may appropriately be mixed/dispersed in the ink described above.

A method for the gravure printing is not particularly limited. For example, any of direct gravure, offset gravure, micro gravure, reverse gravure, reverse coater, and the like can be employed. Such a method can be implemented using a known or commercially available device. Note that, after the gravure printing is performed, a drying step may also be performed as necessary to accelerate the evaporation of the solvent in the ink.

### Adhesion Preventing Layer Formation Step

In the adhesion preventing layer formation step, a surface of the obtained heat sealing layer is coated with the dispersion liquid in which the hydrophobic particles are dispersed in the solvent to form a coated film (coated film as the adhesion preventing layer). That is, it is desirable to coat a part or the whole of the outermost surface of the heat sealing layer in a laminate body in which the heat sealing layer is disposed as the outermost layer with the dispersion liquid in which the hydrophobic particles are dispersed in the solvent and thus form the adhesion preventing layer.

As the laminate body, the laminate body described in the foregoing 1 can be used. That is, the same base layer, the same heat sealing layer, and the same other layers as described in the foregoing 1 can be used.

As the dispersion liquid, a dispersion liquid in which hydrophobic particles are dispersed in a solvent may be used appropriately. In this case, as the hydrophobic particles, the hydrophobic particles described in the foregoing 1 can be used.

The solvent is not particularly limited. The solvent can be selected appropriately from among organic solvents such as alcohol (ethanol), cyclohexane, toluene, acetone, IPA, propylene glycol, hexylene glycol, butyl diglycol, pentamethylene glycol, normal pentane, normal hexane, and hexyl alcohol. A preferred quantity of the dispersed hydrophobic particles relative to the solvent is normally set to about 10 to 100 g/L. In the present invention, another additive can appropriately be added as necessary as long as they do not substantially adversely affect the advantages of the present invention. For example, a dispersant, a colorant, an anti-setting agent, a viscosity modifier, or the like can be added.

As a coating method when the dispersion liquid is applied, any of known methods such as roll coating, gravure coating, bar coating, doctor blade coating, a comma coater, and brush coating can be used. For example, when roll coating or the like is employed, by forming a coated film on the heat sealing layer using a dispersion liquid in which hydrophobic particles are dispersed in a solvent, the adhesion preventing layer formation step can be performed.

Note that, after the adhesion preventing layer formation step, a drying step may also be carried out. A drying method may be either natural drying or forced drying (by heating).

The packaging material thus obtained can be used directly without any modification or by being processed. As a processing method, the same method used to process a known packaging material can be employed. For example, embossing, half-cut processing, notching, or the like may be performed. The packaging material of the present invention can be used appropriate not only as a lid member, but also as a molded container, a wrapper, a tray, a tube, or a bag body such as a pillow bag, a gusset bag, or a pouch. More specifically, by stacking the packaging materials of the present invention such that the respective sealing layers face each other and performing heat sealing on the peripheries thereof, a bag body can preferably be manufactured. Such a bag body can be used for a retort pouch or the like.

### Examples

The following will shows Examples and Comparative Examples and more specifically describe the characteristic features of the present invention. However, the scope of the present invention is not limited to Examples.

### Example 1

A packaging material sample was produced in accordance with the procedure in the following (1) to (3).

### (1) Preparation of Base layer

Using a polyurethane-based dry laminate adhesive agent (abbreviated as D and having a post-drying weight of 5.0 g/m²) and a polyethylene terephthalate film (abbreviated as VM-PET) with aluminum vapor-deposited on one of the surfaces thereof and having a thickness of 16 µm, the aluminum vapor-deposited layer of the film was bonded to one of the surfaces of a paper sheet having a basis weight of 55 g to produce a paper/D/VM-PET laminate body. On the paper surface of the laminate body, OP treatment (abbreviated as OP, containing nitrocellulose as a main component, and having a post-drying coating amount of 1 g/m²) was performed. Thus, a laminate body having an "OP/55 g paper/D/16VM-PET" configuration was obtained as the base layer.

### (2) Preparation and Application of Heat Sealing Agent (Layer)

In a vinyl chloride-vinyl acetate copolymer-based heat sealing agent, 10 wt% of acrylic resin beads having an average particle diameter of 20 µm and a specific weight of 1.2 and 15 wt% of polyethylene resin beads having an average particle diameter of 12 µm and a specific weight of 0.91, each based on a solid content, were mixed/dispersed to prepare a heat sealing agent containing the resin beads. The prepared heat sealing agent was applied to the PET surface of the base described above using a diagonal line plate (having virgule type cup of 100 lines per inch, a depth of 60 µm, and an angle of 45°) cylinder (roll) by a direct gravure method to obtain a laminate body including the base layer and the heat sealing layer. The objective coating amount of the heat sealing agent containing the resin beads was set to a post-drying weight of 3.5 g/m². The pitch of the dense region and the sparse region in the heat sealing layer was 250 µm.

### (3) Adhesion of Hydrophobic Oxide Fine Particles

In 100 mL of ethanol, 2 g of hydrophobic oxide fine particles (produced under the name "AEROSIL R812S" by Evonik Degussa GmbH, having a BET specific surface area of 220 m²/g, and an average primary particle diameter of 7 nm) was dispersed to prepare a coating liquid. The coating liquid was applied to the surface of the heat sealing layer of the laminate body produced in the foregoing (2) using a gravure coating method so as to have a post-drying weight of 0.3 g/m². Then, the coating liquid was dried at 100°C for about 10 seconds to evaporate ethanol and form a coated film (adhesion preventing layer) . In this manner, the packaging material sample was obtained.

### Example 2

A packaging material sample was produced in the same manner as in Example 1 except that the amount of the hydrophobic oxide fine particles dispersed in ethanol in the foregoing (3) was set to 3 g, and the coating amount was changed to a post-drying weight of 0.5 g/m².

### Example 3

A packaging material sample was produced in the same manner as in Example 1 except that the amount of the hydrophobic oxide fine particles dispersed in ethanol in the foregoing (3) was set to 4 g, and the coating amount was changed to a post-drying weight of 0.8 g/m².

### Comparative Example 1

A packaging material sample was produced in the same manner as in Example 1 except that the diagonal line plate cylinder in the foregoing (2) was changed to a gravure cell plate cylinder (having #100 mesh in length and width and a depth of 60 µm).

### Comparative Example 2

A packaging material sample was produced in the same manner as in Example 2 except that the diagonal line plate cylinder in the foregoing (2) was changed to a gravure cell plate cylinder (having #100 mesh in length and width and a depth of 60 µm).

### Comparative Example 3

A packaging material sample was produced in the same manner as in Example 3 except that the diagonal line plate cylinder in the foregoing (2) was changed to a gravure cell plate cylinder (having #100 mesh in length and width and a depth of 60 µm).

### Test Example 1

Using a hot tack tester ("TP-701S" produced by Tester Sangyo Co., Ltd.), the hot tack property of each of the packaging material samples produced in Examples and Comparative Examples described above was measured under the following conditions. Specifically, each of the packaging material samples was cut into a piece (70 mm in length and 35 mm in width) to produce a test sample. As an adherend, a shock-resistant polystyrene sheet (HIPS having a thickness of 0.5 mm) having the same size as that of the sample was prepared and superimposed on the surface of the heat sealing layer (adhesion preventing layer) of the test sample. To the end of each of the test sample and the HIPS located on the same side, a 45 g balance weight was attached and, using a heat seal tester (seal bar having a width of 5 mm and a length of 300 mm), the test sample and the HIPS were sealed at a temperature of T°C and under a pressure of 3.0 kg/cm² for 1.2 seconds. Immediately thereafter, the heat seal tester was released from the hand and the peeling distance over which the seal split due to the weight of the balance weights was examined, the result of which is shown in Fig. 4.

Fig. 5 shows a schematic view of the hot tack tester used in Test Example 1. In Fig. 5, the reference numerals 10, 11, 12, and 13 denote guide rolls, the reference numeral 1 denotes each of the test samples, the reference numeral 20 denotes the adherend, and the reference numerals 21 and 22 denote upper and lower heat sealing bars. The materials 1 and 20 to be sealed were set as indicated in Fig. 5 and, on the respective ends of the individual samples, the balance weights (each weighing 45 g) were loaded. Immediately after (after 1.2 seconds) the samples 1 and 20 were sealed using the upper and lower bars 21 and 22, the two bars 21 and 22 were pulled away from each other, and the distance over which the seal instantaneously split was measured.

### Test Example 2

Packaged bodies were produced using lid members obtained by cutting the individual packaging material samples into the shapes (tabbed rectangles each measuring 62 mm in length and 67 mm in width) of the lid members. Specifically, flanged containers (each molded to have a flange width of 4 mm, a flange outer diameter of 60 mm × 65 mm □, a height of about 48 mm, and an internal volume of about 100 cm³) made from polystyrene were respectively filled with 85 g of two types of commercially available yogurts ((a) product (containing 8.2% of nonfat milk solids and 0.1% of milk fat) produced under the name "Bifidus Aloe Yogurt" by Morinaga Milk Industry Co. , Ltd. and (b) product (containing 8.3% of nonfat milk solids and 3.5% of milk fat) produced under the name "Meiji Bulgaria Yogurt LB81 Plain Oishii Seinyu 100" by Meiji Co., Ltd.)). Then, the lid members described above were heat sealed to the flanges to produce packaged bodies. The heat sealing was performed under conditions where temperature was 225°C and pressure was 3 kgf/cm² to produce ring (recessed) seals each having a 2 mm width in 1.2 seconds.

Each of the packaged bodies produced was caused to vibrate for 1 minute and 40 seconds (vertical reciprocal vibration was repeated twice at 10 Hz for 10 seconds, at 15 Hz for 10 seconds, at 20 Hz for 10 seconds, at 25 Hz for 10 seconds, and at 30 Hz for 10 seconds) using a vibration tester (TRANSPORTATION TESTER BF-30U produced by IDEX Co., Ltd.) under conditions where amplitude (in a vertical direction) was 2.2 mm and acceleration was about 2 G. Then, the lid members were opened with fingers, and the amount (adhesion area) of the yogurt adhering to each of the lid members was visually determined. As a criterion for the determination, the ratio of the adhesion area to a contact area was used, the result is shown in Table 1.

### Test Example 3

A sealing strength was examined for each of the packaging material samples obtained in Examples and Comparative Examples. Using lid members obtained by cutting the individual packaging material samples into the shapes (tabbed rectangles each measuring 62 mm in length and 67 mm in width) of the lid members, packaged bodies were produced. Specifically, the lid members described above were heat sealed to the flanges of flanged containers (each molded to have a flange width of 4 mm, a flange outer diameter of 60 mm × 65 mm □, a height of about 48 mm, and an internal volume of about 100 cm³) made from polystyrene to produce the individual packaged bodies. The heat sealing was performed under conditions where temperature was 210°C and pressure was 2 kg/cm² to produce ring (recessed) seals each having a 1 mm width in 1 second. The tab of the lid member of each of the packaged bodies was pulled at a speed of 100 mm/minute in a direction at an elevation angle of 45 degrees from an opening starting point. Assuming that the maximum load at the time of opening was the sealing strength (N), the sealing strength (N) was measured at n = 6 points for each of the packaged bodies, and the average value of the measured values was determined, the result is shown in Table 1.

### Test Example 4

Using the packaged bodies produced in the same manner as in Test Example 2 as test samples, a sealing strength test was performed in accordance with a sealing strength test method {in Ministerial Ordinance on Milk and Milk Products Concerning Compositional Standard, etc. (Ordinance of Ministry of Health and Welfare No. 17 of April 16, 1979) Japan}. Into each of containers, air was continuously forced to flow, and the internal pressure (mmHg) thereof at the time when air leakage occurred was measured. For each of the packaged bodies, the internal pressure was measured at n = 3 points, and the average value of the measured values was determined (the upper limit of the measured values was 300 mmHg), the result of which is shown as a burst strength in Table 1.

### Test Example 5

Assuming that the surface of each of the packaging material samples which was closer to the heat sealing layer (i.e. adhesion preventing layer) was a surface under test, the contact angle of pure water was measured using a contact angle measurement device (solid-liquid interface analyzer "DropMaster300" produced by Kyowa Interface Science Co., Ltd.), the result of which is shown in Table 1.

### Test Example 6

Assuming that the surface of each of the packaging material samples which was closer to the heat sealing layer (i.e. adhesion preventing layer) was a surface to be under test, each of the packaging material samples was fixed to an even flat stage using a clip with the tested surface facing upward. Then, a commercially available yogurt (a drop (about 0.4 g) of a soft yogurt produced under the name "Bifidus Aloe Yogurt" by Morinaga Milk Industry Co. , Ltd.) was supplied dropwise from an adjacent position to the tested surface. The even stage was inclined, and the angle when the drop fell down was determined, the result is shown in Table 1.

**[Table 1]**

| | Example/Comparative Example | | Example 1 | Example 2 | Example 3 | Comparative Example 1 | Comparative Example 2 | Comparative Example 3 |
|---|---|---|---|---|---|---|---|---|
| Sample Production Conditions | Heat-Seal-Layer-Coated Plate Cylinder | | Diagonal Line Plate Cylinder | Diagonal Line Plate Cylinder | Diagonal Line Plate Cylinder | Gravure Cell Plate Cylinder | Gravure Cell Plate Cylinder | Gravure Cell Plate Cylinder |
| | Coating Amount of Hydrophobic Oxide Fine Particles g/m² | | 0.3 | 0.5 | 0.8 | 0.3 | 0.5 | C.8 |
| Physical Property Evaluation Items | Repellency Durability Test (Surface Adhesion Ratio) | (a) Yogurt | 20% Adhesion | 10% Adhesion | Substantially 0% | 100% Adhesion | 80% Adhesion | 60% Adhesion |
| | | (b) Yogurt (Containing fat) | 25% Adhesion | 15% Adhesion | 5% Adhesion | 100% Adhesion | Substantially 100% Adhesion | 100% Adhesion |
| | Sealing Strength/N | | 5.8 | 5.7 | 5.7 | 5.9 | 5.4 | 5.7 |
| | Burst Strength/mmHg | | 300 | 300 | 300 | 300 | 297 | 295 |
| | Contact Angle/Degree | | 155 | 161 | 180 | 149 | 147 | 150 |
| | Angle of Fall/Degree | | 14 | 14 | 12 | 20 | 21 | 19 |

As is also obvious from the results in Table 1, while each of the samples of Comparative Examples 1 to 3 has an adhesion area ratio of not less than 60%, each of the samples of Examples 1 to 3 has an adhesion area ratio of not more than 30%. In particular, in Examples 2 and 3, practically no adhesion was observed and therefore it can be seen that high anti-adhesion property (yogurt repellency) can be obtained.

It can also be seen that, while each of the samples of Comparative Examples 1 to 3 shows substantially no yogurt repellency against the yogurt containing 3.5% of milk fat, each of the samples of Examples 1 to 3 has desired yogurt repellency even against the yogurt containing 3.5% of milk fat.

### Test Example 7

The surface of each of the packaging material samples which was closer to the heat sealing layer (i.e. adhesion preventing layer) was observed. The surfaces of the packaging material samples of Example 1 and Comparative Example 1 which were closer to the heat sealing layers (i.e. adhesion preventing layers) were observed using an optical microscope. Figs. 6 and 7 show photographs thereof. From the photographs, it can be seen that more filler particles are dispersed and applied in Example 1 though in one direction than in Comparative Example 1. Comparative Example 1 has more portions in which the filler particles are not dispersed. It is presumed that the difference makes an effect on the difference between evaluation values of a hot tack property and the like.

## Claims

1. A packaging material, comprising in the following order at least:
a) a base layer;
b) a heat sealing layer; and
c) an adhesion preventing layer,
wherein
(1) the heat sealing layer contains filler particles and has a dense region where the filler particles are densely present and a sparse region where the filler particles are sparsely distributed,
(2) each of the dense region and the sparse region has a substantially belt-like planar shape, and
(3) the dense region and the sparse region are alternately and consecutively arranged such that the entire heat sealing layer has a striped pattern.

2. The packaging material according to claim 1, wherein the heat sealing layer is formed so as to cover the entire base layer.

3. The packaging material according to claim 1, wherein the adhesion preventing layer is formed so as to substantially entirely cover the dense region and the sparse region in the heat sealing layer.

4. The packaging material according to claim 1, wherein the adhesion preventing layer is composed of hydrophobic fine particles.

5. The packaging material according to claim 1, wherein an average particle diameter of the filler particles is 0.1 to 50 µm.

6. The packaging material according to claim 1, wherein a content of the filler particles in the heat sealing layer is 1 to 80 wt%.

7. A method for manufacturing a packaging material according to claim 1,
the method comprising:
(1) a step of forming the heat sealing layer by coating one of surfaces of the base layer with an ink containing a heat sealing component and filler particles by using a gravure printing method using a diagonal line plate, and
(2) a step of forming the adhesion preventing layer by coating a surface of the obtained heat sealing layer with a dispersion liquid in which hydrophobic particles are dispersed in a solvent.

## Patentansprüche

1. Verpackungsmaterial, umfassend in der folgenden Reihenfolge mindestens:
a) eine Grundschicht;
b) eine Heißsiegelschicht; und
c) eine haftverhindernde Schicht,
wobei
(1) die Heißsiegelschicht Füllstoffteilchen enthält und einen dichten Bereich, in welchem die Füllstoffteilchen dicht vorhanden sind, und einen spärlichen Bereich, in welchem die Füllstoffteilchen spärlich verteilt sind, aufweist,
(2) der dichte Bereich und der spärliche Bereich jeweils eine im Wesentlichen gürtelartige, ebene Form aufweisen, und
(3) der dichte Bereich und der spärliche Bereich abwechselnd und aufeinanderfolgend derart angeordnet sind, dass die gesamte Heißsiegelschicht ein Streifenmuster aufweist.

2. Verpackungsmaterial nach Anspruch 1, wobei die Heißsiegelschicht derart ausgebildet ist, dass sie die gesamte Grundschicht bedeckt.

3. Verpackungsmaterial nach Anspruch 1, wobei die haftverhindernde Schicht derart ausgebildet ist, dass sie den dichten Bereich und den spärlichen Bereich in der Heißsiegelschicht im Wesentlichen vollständig bedeckt.

4. Verpackungsmaterial nach Anspruch 1, wobei die haftverhindernde Schicht aus hydrophoben Feinteilchen zusammengesetzt ist.

5. Verpackungsmaterial nach Anspruch 1, wobei ein durchschnittlicher Teilchendurchmesser der Füllstoffteilchen 0,1 bis 50 µm beträgt.

6. Verpackungsmaterial nach Anspruch 1, wobei ein Gehalt der Füllstoffteilchen in der Heißsiegelschicht 1 bis 80 Gew.-% beträgt.

7. Verfahren zur Herstellung eines Verpackungsmaterials nach Anspruch 1, wobei das Verfahren umfasst:
(1) einen Schritt des Bildens der Heißsiegelschicht durch Beschichten einer der Oberflächen der Grundschicht mit einer Tinte, enthaltend eine Heißsiegelkomponente und Füllstoffteilchen, unter Verwendung eines Tiefdruckverfahrens unter Verwendung einer Diagonallinienplatte, und
(2) einen Schritt des Bildens der haftverhindernden Schicht durch Beschichten einer Oberfläche der erhaltenen Heißsiegelschicht mit einer Dispersionsflüssigkeit, in welcher hydrophobe Teilchen dispergiert in einem Lösungsmittel vorliegen.

## Revendications

1. Matière d'emballage comprenant dans l'ordre suivant au moins:
a) une couche de base;
b) une couche de thermo-scellage; et
c) une couche empêchant l'adhérence,
dans laquelle
(1) la couche de thermo-scellage contient des particules de remplissage et présente une zone dense où les particules de remplissage sont densément présentes et une zone peu dense où les particules de remplissage sont peu densément distribuées,
(2) chacune de la zone dense et la zone peu dense présentent une forme planaire de type courroie, et
(3) la zone dense et la zone peu dense sont disposées en alternance et en conséquence de sorte que toute la couche de thermo-scellage présente un motif en bandes.

2. Matière d'emballage selon la revendication 1, dans laquelle la couche de thermo-scellage est formée de manière à recouvrir toute la couche de base.

3. Matière d'emballage selon la revendication 1, dans laquelle la couche empêchant l'adhérence est formée de manière à recouvrir substantiellement toute la zone dense et la zone peu dense dans la couche de thermo-scellage.

4. Matière d'emballage selon la revendication 1, dans laquelle la couche empêchant l'adhérence est composée de fines particules hydrophobes.

5. Matière d'emballage selon la revendication 1, dans laquelle le diamètre particulaire moyen des particules de remplissage va de 0,1 à 50 µm.

6. Matière d'emballage selon la revendication 1, dans laquelle la teneur en particules de remplissage dans la couche de thermo-scellage va de 1 à 80% en poids.

7. Procédé de fabrication d'une matière d'emballage selon la revendication 1,
le procédé comprenant:
(1) une étape de formation de la couche de thermo-scellage par revêtement d'une des surfaces de la couche de base avec une encre contenant un composant de thermo-scellage et des particules de remplissage en utilisant un procédé d'héliogravure utilisant une planche de trait diagonale, et
(2) une étape de formation de la couche empêchant l'adhérence par revêtement d'une surface de la couche de thermo-scellage avec un liquide de dispersion dans lequel des particules hydrophobes sont dispersées dans un solvant.
